# EUROPÄISCHE PATENTSCHRIFT

(11) **EP 1 407 942 B1**
(45) Veröffentlichungstag und Bekanntmachung des Hinweises auf die Patenterteilung: **31.01.2007**
(21) Anmeldenummer: 03021675.8
(22) Anmeldetag: 29.09.2003
(51) Int. Cl.: B60R 21/16

(54) **Gassack für ein Fahrzeuginsassen-Rückhaltesystem und Verfahren zu dessen Herstellung**
Airbag for a vehicle occupant restraining system and process for its manufacture
Airbag pour un système de retenue de passager d'un véhicule et son procédé de fabrication

(30) Priorität: 07.10.2002 DE 10246768
(43) Veröffentlichungstag der Anmeldung: 14.04.2004
(73) Patentinhaber: TRW Automotive GmbH, 73553 Alfdorf (DE)
(72) Erfinder: Hofmann, Sven, 73525 Schwäbisch-Gmünd (DE)
(74) Vertreter: Strass, Jürgen

(56) Entgegenhaltungen:
- PATENT ABSTRACTS OF JAPAN Bd. 1999, Nr. 05, 31. Mai 1999 (1999-05-31) -& JP 11 048889 A (NIPPON PLAST CO LTD), 23. Februar 1999 (1999-02-23)
- PATENT ABSTRACTS OF JAPAN Bd. 2002, Nr. 10, 10. Oktober 2002 (2002-10-10) -& JP 2002 160559 A (T S TEC KK; IMASEN ELECTRIC IND CO LTD), 4. Juni 2002 (2002-06-04)

## Beschreibung

Die Erfindung betrifft eine Baugruppe, umfassend einen Seitengassack für ein Fahrzeuginsassen-Rückhaltesystem und eine Fahrzeugseitenstruktur, wobei sich der Seitengassack sich zwischen einer Fahrzeugseitenstruktur und einem Fahrzeuginsassen entfaltet und aus zwei Textilzuschnitten hergestellt ist.

Die derzeit gängigen Seitengassäcke bestehen in der Regel aus zwei deckungsgleichen textilen Mantellagen, die aufeinandergelegt und durch eine umlaufende Umfangsnaht miteinander verbunden werden. Um bei einem Rückhaltesystem mit einem solchen Gassack die Gassackausdehnung zwischen Insassen und Fahrzeugseitenstruktur zu erhöhen, muß das Gassacklayout in Fahrtrichtung stark erweitert werden. Dadurch wird jedoch das Gassackvolumen unverhältnismäßig stark vergrößert, was zu langen Füllzeiten und erhöhtem Platzbedarf im Gassackmodul führt. Das Aufblasverhalten solcher kissenartig aufgebauter Gassäcke, insbesondere die Ausdehnung in senkrechter Richtung zu den Ebenen der Mantellagen, kann durch Fangbänder und Abnäher beeinflußt werden. Durch den sich aufblasenden Gassack wird die Umfangsnaht hauptsächlich auf Zug belastet, wobei das einströmende heiße Gas meist direkt auf die belastete Umfangsnaht trifft.

Aus der JP 11 48889 ist ein Front-Gassack für einen Beifahrer bekannt, der aus zwei Textilzuschnitten (22, 32) hergestellt ist, wobei
jeder Zuschnitt einen ersten Randabschnitt, eine dazu entgegengesetzten zweiten Randabschnitt sowie einen dritten Randabschnitt und einen vierten Randabschnitt und den zweiten Randabschnitt verbinden, wobei der dritte Randabschnitt und der vierte Randabschnitt jeweils in zwei durch eine imaginäre Mittellinie getrennte, zur Mittellinie symmetrische Teilabschnitte unterteilt sind,
wenigstens der erste Randabschnitt des einen Zuschnitts mit dem ersten Randabschnitt des anderen Zuschnitts unter Bildung wenigstens einer ersten Naht vernäht ist,
die Teilabschnitte des dritten Randabschnitts des einen Zuschnitts miteinander und die Teilabschnitte des dritten Randabschnitts des anderen Zuschnitts miteinander vernäht sind,
die Teilabschnitte des vierten Randabschnitts des einen Zuschnitts miteinander und die Teilabschnitte des vierten Randabschnitts des anderen Zuschnitts miteinander vernäht sind, und
der erste Randabschnitt des einen Zuschnitts und der erste Randabschnitt des anderen Zuschnitts bezüglich der Mittellinie nicht symmetrisch zu dem zweiten Randabschnitt des einen Zuschnitts und dem zweiten Randabschnitt des anderen Zuschnitts sind, wobei jeweils eine Hälfte der Zuschnitte im Vergleich zur anderen Hälfte eine bauchartige Ausdehnung hat, so daß der Seitengassack im aufgeblasenen Zustand einen flachen Abschnitt und einen dem Fahrzeuginsassen zugewandten bauchförmigen Abschnitt hat.

Die Erfindung schafft eine Baugruppe mit einem leicht herzustellenden Seitengassack, der ein verbessertes Aufblasverhalten zeigt und in den Nahtbereichen weniger stark belastet wird.

Gemäß der Erfindung ist hierzu eine Baugruppe mit den Merkmalen des Anspruchs 1 vorgesehen.

Ein so aufgebauter Seitengassack hat während des Aufblasens eine einem kissenartig aufgebauten Gassack überlegene dreidimensionale Form. Im Vergleich zu herkömmlichen Seiten-Rückhaltesystemen kann bei einem System mit der erfindungsgemäßen Baugruppe der Raum zwischen der Fahrzeugseitenstruktur und dem Fahrzeuginsassen daher schon zu Beginn einer seitlichen Intrusion mit dem Seitengassack ausgefüllt werden. Somit ist ein schnellerer und gezielterer Abbau der Intrusionsenergie möglich. Außerdem werden die Kräfte des sich entfaltenden Seitengassacks auf mehrere Nähte verteilt, so daß die Belastung jeder einzelnen Naht reduziert ist. Durch geeignete Wahl des Verlaufs der ersten und zweiten Randabschnitte kann die Form des aufgeblasenen Seitengassacks an die jeweiligen Bedürfnisse, insbesondere an den Abstand zwischen Fahrzeuginsassen und Fahrzeugseitenstruktur sowie an die geometrischen Gegebenheiten der Seitenstruktur angepaßt werden.

Die Belastung der Nahtbereiche des Seitengassacks der erfindungsgemäßen Baugruppe kann weiter reduziert werden, indem eine Einblasöffnung in einem Zuschnitt gegenüber einem nicht vernähten Bereich des anderen Zuschnitts gebildet ist.

Weitere Merkmale und Vorteile der Erfindung ergeben sich aus der folgenden Beschreibung und aus den beigefügten Zeichnungen, auf die Bezug genommen wird. In den Zeichnungen zeigen:
- Figur 1 eine Draufsicht auf zwei Textilzuschnitte zur Herstellung eines herkömmlichen Gassacks;
- Figur 2 eine Draufsicht auf einen aus den Zuschnitten der Figur 1 nach einem herkömmlichen Verfahren hergestellten Gassack;
- Figur 3 eine Schnittansicht des Gassacks aus Figur 2 entlang der Linie A-A während des Aufblasens;
- Figur 4 eine Draufsicht auf zwei aufeinanderliegende Textilzuschnitte zur Herstellung eines beispielhaften, nicht erfindungsgemäßen Seitengassacks;
- Figur 5 die Textilzuschnitte aus Figur 4 in einem Zwischenschritt des Herstellungsverfahrens;
- Figur 6 eine Schnittansicht entlang der Linie B-B in Figur 5;
- Figur 7 eine Seitenansicht des aus den Zuschnitten der Figur 4 hergestellten Seitengassacks;
- Figur 8 eine Schnittansicht des Seitengassacks aus Figur 7 entlang der Linie C-C während des Aufblasens;
- Figuren 9 bis 11 den Figuren 5, 7 und 8 entsprechende Darstellungen von Textilzuschnitten bzw. eines aus diesen Zuschnitten hergestellten Seitengassacks für eine erfindungsgemäße Baugruppe;
- Figur 12 eine Draufsicht auf zwei Textilzuschnitte zur Herstellung eines Seitengassacks für eine erfindungsgemäße Baugruppe gemäß einem zweiten Ausführungsbeispiel;
- Figur 13 die Textilzuschnitte aus Figur 12 in einem Zwischenschritt des Herstellungsverfahrens;
- Figur 14 eine Seitenansicht des aus den Zuschnitten der Figur 12 hergestellten Seitengassacks für eine erfindungsgemäße Baugruppe;
- Figuren 15 und 16 Draufsichten auf zwei Textilzuschnitte zur Herstellung eines Seitengassacks für eine erfindungsgemäße Baugruppe gemäß einem dritten Ausführungsbeispiel;
- Figur 17 eine Draufsicht auf die aufeinanderliegenden Textilzuschnitte aus den Figuren 15 und 16 in einem Zwischenschritt des Herstellungsverfahrens ; und
- Figur 18 eine Seitenansicht des aus den Zuschnitten der Figuren 15 und 16 hergestellten Seitengassacks.

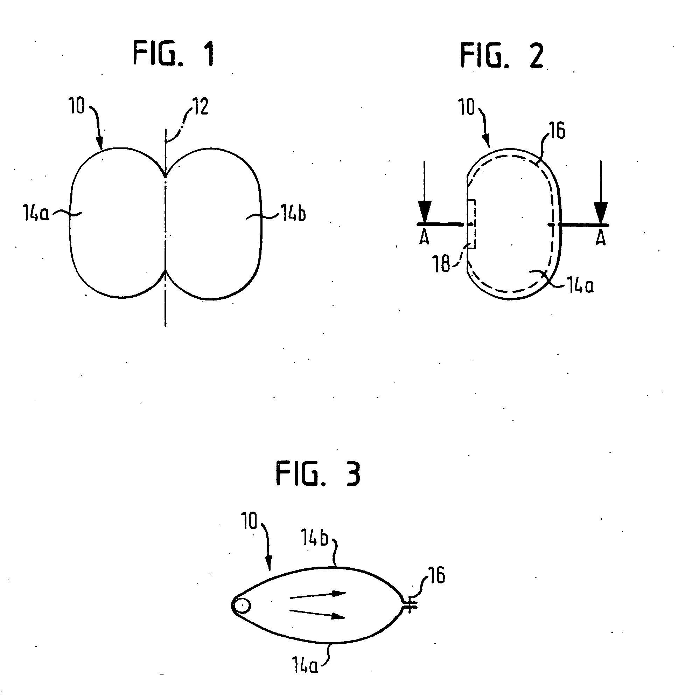

Anhand der Figuren 1 bis 3 ist ein herkömmliches Verfahren zur Herstellung eines Gassacks 10 gezeigt, der als Seitengassack in einem entsprechenden Fahrzeuginsassen-Rückhaltesystem eingesetzt werden kann. Von den einstückig ausgebildeten und bezüglich einer Mittellinie 12 symmetrischen Textilzuschnitten (siehe Figur 1) wird eine Hälfte 14a um die Mittellinie 12 umgeschlagen, so daß sie deckungsgleich auf der anderen Hälfte 14b zu liegen kommt. Die beiden aufeinanderliegenden Lagen werden an ihren Außenrändern unter Bildung einer Naht 16 umlaufend miteinander vernäht. Eine Einblasöffnung 18 ist im Bereich der Mittellinie 12 vorgesehen (siehe Figur 2). Bei einem Aufblasen des Gassacks 10 mit einem Gasgenerator liegt zumindest ein Teil der Naht 16 im direkten Strömungsweg des heißen Druckgases (siehe Figur 3).

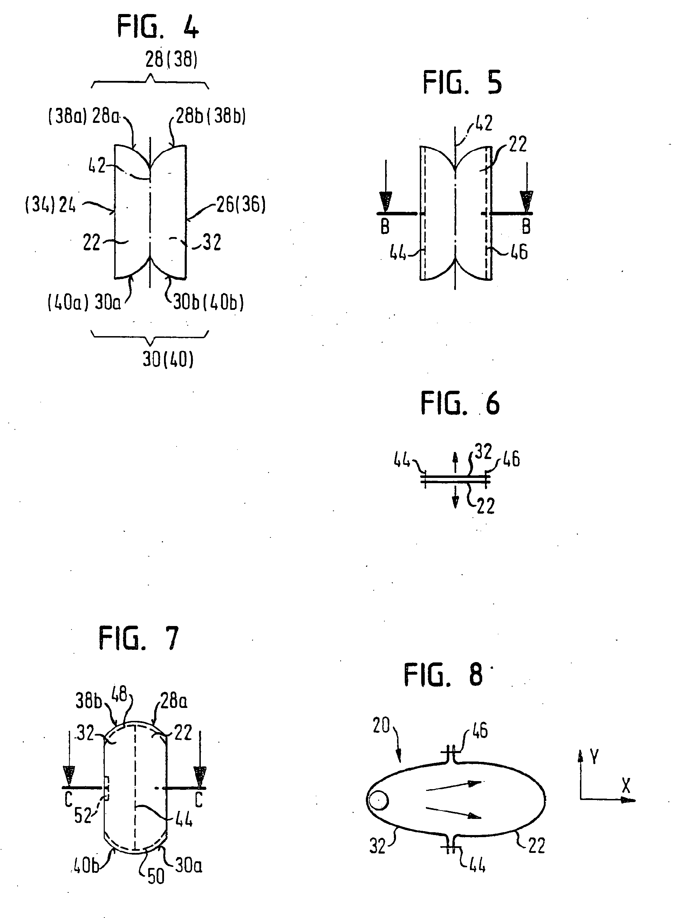

Die Figuren 4 bis 8 beschreiben beispielhaft die Herstellung eines nicht erfindungsgemäßen Seitengassacks 20. Zwei entsprechend der Darstellung in Figur 4 geformte, bezüglich einer Mittellinie 42 symmetrische Textilzuschnitte 22, 32 werden auf einer Ebene aufeinandergelegt (in Figur 4 ist nur der obenliegende Zuschnitt 22 zu sehen). Die Zuschnitte 22, 32 weisen jeweils zwei bezüglich der Mittellinie 42 entgegengesetzte längsseitige Randabschnitte 24, 26 bzw. 34, 36 und zwei die längsseitigen Randabschnitte 24, 26 bzw. 34, 36 verbindende Randabschnitte 28, 30 bzw. 38, 40 auf, die jeweils in zwei Teilabschnitte 28a, 28b und 30a, 30b bzw. 38a, 38b und 40a, 40b unterteilt sind. Die beiden Zuschnitte 22, 32 werden zunächst entlang ihrer längsseitigen Randabschnitte 24, 26 bzw. 34, 36 unter Bildung der Nähte 44, 46 miteinander vernäht (siehe Figur 5).

Anschließend werden die beiden Zuschnitte 22, 32 an der Mittellinie 42 gemäß den Pfeilen in Figur 6 in entgegengesetzte Richtungen auseinandergezogen, so daß die beiden Nähte 44, 46 aufeinander zu liegen kommen, wie aus der Ansicht der Figur 7 hervorgeht, die gegenüber der Ansicht der Figur 5 um 90° um die Mittellinie 42 gedreht ist. Zum Schließen des Seitengassacks 20 werden die nun aufeinanderliegenden, noch nicht vernähten Randabschnitte mit zwei Nähten 48, 50 vernäht. Die Naht 48 verbindet die beiden Teilabschnitte 28a und 28b des einen Zuschnitts 22 miteinander und die beiden Teilabschnitte 38a und 38b des anderen Zuschnitts 32 miteinander, während die Naht 50 die beiden Teilabschnitte 30a und 30b des einen Zuschnitts 22 miteinander und die beiden Teilabschnitte 40a und 40b des anderen Zuschnitts 32 miteinander verbindet. Eine Einblasöffnung 52 ist ähnlich wie beim herkömmlichen Gassack 10 im Bereich der Mittellinie 42 im oberen Zuschnitt 22 vorgesehen.

Der so aufgebaute Seitengassack 20 entfaltet sich im Vergleich zum herkömmlichen Gassack 10 schneller in Y-Richtung. Außerdem liegt beim erfindungsgemäßen Seitengassack 20 keine der Nähte 44, 46, 48, 50 im direkten Strömungsweg des heißen Druckgases. Die bei der Entfaltung an den Zuschnitten 22, 32 wirkenden Kräfte werden auf mehrere Nähte verteilt, so daß die Belastung der einzelnen Nähte reduziert ist.

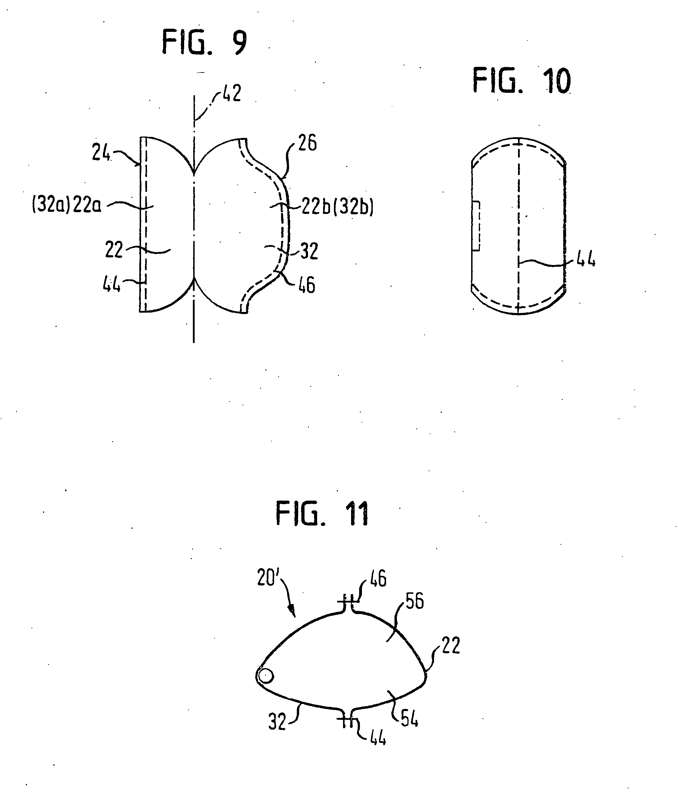

Ein Beispiel für die Herstellung eines Seitengassacks für eine erfindungsgemäße Baugruppe ist in den Figuren 9 bis 11 dargestellt. Wie in Figur 9 zu sehen ist, ist die Form der beiden Textilzuschnitte 22, 32 jeweils nicht symmetrisch bezüglich der Mittellinie 42. Bei beiden Zuschnitten 22, 32 hat eine Hälfte 22a bzw. 32a im Vergleich zur anderen Hälfte 22b bzw. 32b eine bauchartige Ausdehnung. Der aus diesen Zuschnitten 22, 32 hergestellte Gassack 20' hat im aufgeblasenen Zustand die in Figur 11 gezeigte Form mit einem flachen Abschnitt 54 und einem dem Fahrzeuginsassen zugewandten bauchförmigen Abschnitt 56.

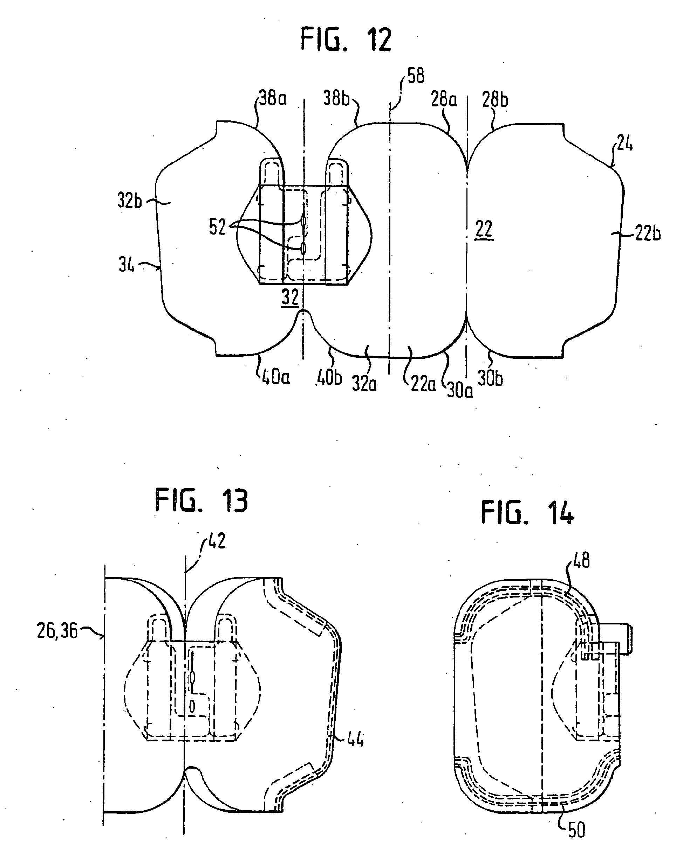

Das in den Figuren 12 bis 14 dargestellte Beispiel zur Herstellung eines Seitengassacks für eine erfindungsgemäße Baugruppe unterscheidet sich von den zuvor beschriebenen Verfahren, insbesondere dadurch, daß die beiden Textilzuschnitte 22, 32 nicht getrennt, sondern einstückig vorliegen (siehe Figur 12). Der mit mehreren Verstärkungslagen um die Einblasöffnung 52 versehene und bezüglich einer Mittellinie 58 zum Zuschnitt 22 nahezu symmetrische Zuschnitt 32 wird gemäß der Darstellung der Figur 12 um die Mittellinie 58 nach hinten umgeklappt, so daß er, wie in Figur 13 zu sehen ist, auf der Rückseite des Zuschnitts 22 zu liegen kommt. Abgesehen davon, daß auf die Naht 46 verzichtet werden kann, entspricht das weitere Herstellungsverfahren dem des vorherigen Ausführungsbeispiels.

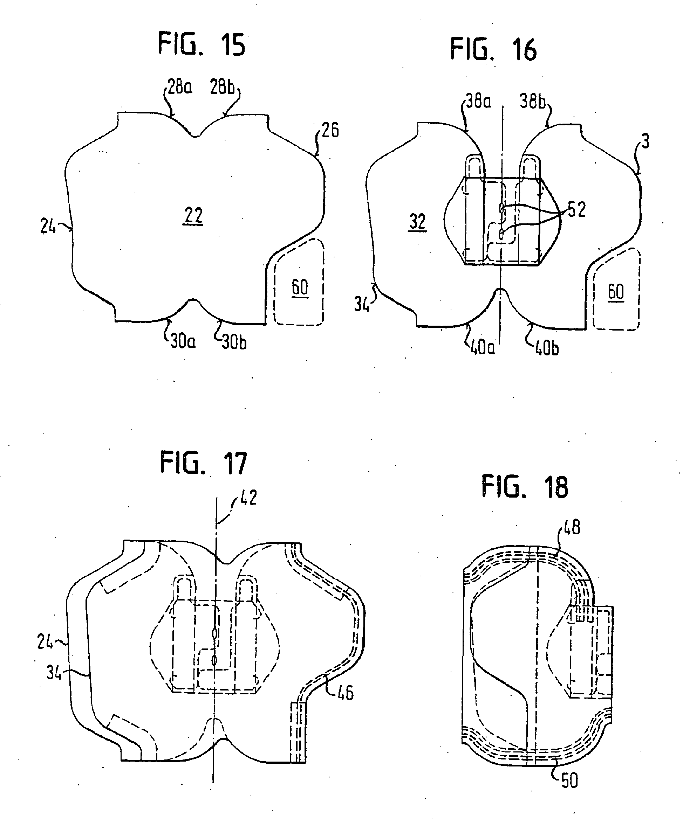

Bei der Herstellung eines Seitengassacks für eine erfindungsgemäße Baugruppe gemäß den Figuren 15 bis 18 werden zwei separate Textilzuschnitte 22, 32 (Figuren 15 und 16) verwendet, die aufgrund der angestrebten Endform des Seitengassacks nicht ganz deckungsgleich sind. Der spezielle Verlauf der Randabschnitte 24 bzw. 34 und 26 bzw. 36 sorgt später für einen dem Fahrzeuginsassen zugewandten bauchförmigen Abschnitt und eine an die Fahrzeugseitenstruktur angepaßte Form des entgegengesetzten Abschnitts des Seitengassacks. Bei dem dargestellten Ausführungsbeispiel ist z.B. der Bereich 60 einer Armauflage ausgespart. Der in Figur 15 dargestellte Textilzuschnitt 22 wird auf den in Figur 16 dargestellten Textilzuschnitt 32 gelegt. Das weitere Herstellungsverfahren entspricht dem der vorherigen Ausführungsbeispiele.

Bei allen Ausführungsbeispielen können die außenliegenden Nähte 44, 46 und 48 bzw. 50 des Seitengassacks (soweit vorhanden) durch Umstülpen des Gassacks nach innen verlegt werden. Dies kann nach Bildung der Naht 48 oder nach Bildung der Naht 50 geschehen, bevor dann abschließend die Naht 50 bzw. 48 gebildet wird.

## Patentansprüche

1. Baugruppe, umfassend einen Seitengassack (10) für ein Fahrzeuginsassen-Rückhaltesystem und einer Fahrzeugseitenstruktur, wobei sich der Seitengassack (10), zwischen der Fahrzeugseitenstruktur und einem Fahrzeuginsassen entfaltet und aus zwei Textilzuschnitten (22, 32) hergestellt ist, und wobei
jeder Zuschnitt (22 bzw. 32) einen ersten Randabschnitt (24 bzw. 34), einen dazu entgegengesetzten zweiten Randabschnitt (26 bzw. 36) sowie einen dritten Randabschnitt (28 bzw. 38) und einen vierten Randabschnitt (30 bzw. 40) aufweist, welche den ersten Randabschnitt (24 bzw. 34) und den zweiten Randabschnitt (26 bzw. 36) verbinden, wobei der dritte Randabschnitt (28 bzw. 38) und der vierte Randabschnitt (30 bzw. 40) jeweils in zwei durch eine imaginäre Mittellinie (42) getrennte, zur Mittellinie (42) symmetrische Teilabschnitte (28a, 28b bzw. 38a, 38b) unterteilt sind,
wenigstens der erste Randabschnitt (24) des einen Zuschnitts (22) mit dem ersten Randabschnitt (34) des anderen Zuschnitts (32) unter Bildung wenigstens einer ersten Naht (44) vernäht ist,
die Teilabschnitte (28a, 28b) des dritten Randabschnitts (28) des einen Zuschnitts (22) miteinander und die Teilabschnitte (38a, 38b) des dritten Randabschnitts (38) des anderen Zuschnitts (32) miteinander vernäht sind,
die Teilabschnitte (30a, 30b) des vierten Randabschnitts (30) des einen Zuschnitts (22) miteinander und die Teilabschnitte (40a, 40b) des vierten Randabschnitts (40) des anderen Zuschnitts (32) miteinander vernäht sind, und
der erste Randabschnitt (24) des einen Zuschnitts (22) und der erste Randabschnitt (34) des anderen Zuschnitts (32) bezüglich der Mittellinie (42) nicht symmetrisch zu dem zweiten Randabschnitt (26) des einen Zuschnitts (22) und dem zweiten Randabschnitt (36) des anderen Zuschnitts (32) sind, wobei jeweils eine Hälfte (22a, 32a) der Zuschnitte (22, 32) im Vergleich zur anderen Hälfte (22b, 32b) eine bauchartige Ausdehnung hat, so daß der Seitengassack (20') im aufgeblasenen Zustand einen flachen Abschnitt (54) und einen dem Fahrzeuginsassen zugewandten bauchförmigen Abschnitt (56) hat und die die beiden Zuschnitte (22, 32) verbindende Naht (44) vertikal verläuft.

2. Baugruppe nach einem der vorhergehenden Ansprüche, **dadurch gekennzeichnet, daß** die Textilzuschnitte (22, 32) im wesentlichen deckungsgleich sind.

3. Baugruppe nach einem der vorhergehenden Ansprüche, **dadurch gekennzeichnet, daß** die Teilabschnitte (28a, 28b bzw. 38a, 38b) des dritten Randabschnitts (28 bzw. 38) und/oder die Teilabschnitte (30a, 30b bzw. 40a, 40b) des vierten Randabschnitts (30 bzw. 40) bezüglich der Mittellinie (42) symmetrisch sind.

4. Baugruppe nach einem der vorhergehenden Ansprüche, **dadurch gekennzeichnet, daß** auch der zweite Randabschnitt (26) des einen Zuschnitts (22) mit dem zweiten Randabschnitt (36) des anderen Zuschnitts (32) vernäht ist.

5. Baugruppe nach einem der vorhergehenden Ansprüche, **dadurch gekennzeichnet, daß** eine Einblasöffnung (52) in einem Zuschnitt gegenüber einem nicht vernähten Bereich des anderen Zuschnitts gebildet ist.

6. Baugruppe nach einem der vorhergehenden Ansprüche, **dadurch gekennzeichnet, daß** die Textilzuschnitte (22, 32) einstückig miteinander ausgebildet sind.

## Claims

1. An assembly, comprising a side gas bag (10) for a vehicle occupant restraint system and a vehicle side structure, the side gas bag (10) unfolding between the vehicle side structure and a vehicle occupant and being produced from two textile blanks (22, 32), and
each blank (22 or respectively 32) having a first margin section (24 or respectively 34), a second margin section (26 or respectively 36) opposite thereto, and a third margin section (28 or respectively 38) and a fourth margin section (30 or respectively 40), which connect the first margin section (24 or respectively 34) and the second margin section (26 or respectively 36), the third margin section (28 or respectively 38) and the fourth margin section (30 or respectively 40) each being divided into two partial sections (28a, 28b or respectively 38a, 38b) which are separated by an imaginary central line (42) and are symmetrical to the central line (42),
at least the first margin section (24) of the one blank (22) being sewn to the first margin section (34) of the other blank (32), forming at least a first seam (44),
the partial sections (28a, 28b) of the third margin section (28) of the one blank (22) being sewn together and the partial sections (38a, 38b) of the third margin section (38) of the other blank (32) being sewn together,
the partial sections (30a, 30b) of the fourth margin section (30) of the one blank (22) being sewn together and the partial sections (40a, 40b) of the fourth margin section (40) of the other blank (32) being sewn together, and
the first margin section (24) of the one blank (22) and the first margin section (34) of the other blank (32) not being symmetrical to the second margin section (26) of the one blank (22) and the second margin section (36) of the other blank (32) with respect to the central line (42), one respective half (22a, 32a) of the blanks (22, 32) having a bulge-like expansion compared with the other half (22b, 32b), so that in the inflated state the side gas bag (20') has a flat section (54) and a bulge-shaped section (56) facing the vehicle occupant, and the seam (44) connecting the two blanks (22, 32) runs vertically.

2. The assembly according to any of the preceding claims, **characterized in that** the textile blanks (22, 32) are substantially congruent.

3. The assembly according to any of the preceding claims, **characterized in that** the partial sections (28a, 28b or respectively 38a, 38b) of the third margin section (28 or respectively 38) and/or the partial sections (30a, 30b or respectively 40a, 40b) of the fourth margin section (30 or respectively 40) are symmetrical with respect to the central line (42).

4. The assembly according to any of the preceding claims, **characterized in that** the second margin section (26) of the one blank (22) is also sewn to the second margin section (36) of the other blank (32).

5. The assembly according to any of the preceding claims, **characterized in that** an inflation opening (52) is formed in one blank opposite a non-sewn region of the other blank.

6. The assembly according to any of the preceding claims, **characterized in that** the textile blanks (22, 32) are constructed in one piece with each other.

## Revendications

1. Ensemble comprenant un coussin à gaz latéral (10) pour un système de retenue de passager de véhicule et une structure latérale de véhicule, dans lequel le coussin à gaz latéral (10) se déploie entre la structure latérale de véhicule et un passager du véhicule et est réalisé à partir de deux découpes de tissu (22, 32) et dans lequel
chaque découpe (22, 32) présente respectivement un premier tronçon de bord (24, 34), un deuxième tronçon de bord (26, 36) opposé à celui-ci ainsi qu'un troisième tronçon de bord (28, 38) et un quatrième tronçon de bord (30, 40) qui relient le premier tronçon de bord (24, 34) au deuxième tronçon de bord (26, 36), le troisième tronçon de bord (28, 38) et le quatrième tronçon de bord (30, 40) sont chacun subdivisés en deux tronçon partiels (28a, 28b ; 38a, 38b) séparés par une ligne médiane (42) imaginaire et symétriques par rapport à la ligne médiane,
au moins le premier tronçon de bord (24) de ladite une découpe (22) est cousu avec le premier tronçon de bord (34) de l'autre découpe (32) en formant au moins une première couture (44),
les tronçons partiels (28a, 28b) du troisième tronçon de bord (28) de ladite une découpe (22) sont cousus les uns aux autres et les tronçons partiels (38a, 38b) du troisième tronçon de bord (38) de l'autre découpe (32) sont cousus les uns aux autres,
les tronçons partiels (30a, 30b) du quatrième tronçon de bord (30) de ladite une découpe (22) sont cousus les uns aux autres et les tronçons partiels (40a, 40b) du quatrième tronçon de bord (40) de l'autre découpe (32) sont cousus les uns aux autres, et
le premier tronçon de bord (24) de ladite une découpe (22) et le premier tronçon de bord (34) de l'autre découpe (32) ne sont pas symétriques au deuxième tronçon de bord (26) de ladite une découpe (22) et au deuxième tronçon de bord (36) de l'autre découpe (32), par rapport à la ligne médiane (42), une moitié (22a, 32a) de chaque découpe (22, 32) ayant une extension ventrue en comparaison à l'autre moitié (22b, 32b), de sorte que le coussin à gaz latéral (20') à l'état gonflé a un tronçon plat (54) et un tronçon ventru (56) tourné vers le passager du véhicule, et la couture (44) qui relie les deux découpes (22, 32) s'étend à la verticale.

2. Ensemble selon la revendication précédente, **caractérisé en ce que** les découpes textiles (22, 32) coïncident sensiblement l'une à l'autre.

3. Ensemble selon l'une des revendications précédentes, **caractérisé en ce que** les tronçon partiels (28a, 28b ; 38a, 38b) du troisième tronçon de bord (28, 38) et/ou les tronçons partiels (30a, 30b ; 40a, 40b) du quatrième tronçon de bord (30, 40) sont symétriques par rapport à la ligne médiane (42).

4. Ensemble selon l'une des revendications précédentes, **caractérisé en ce que** le deuxième tronçon de bord (26) aussi de ladite une découpe (22) est cousu avec le deuxième tronçon de bord (36) de l'autre découpe (32).

5. Ensemble selon l'une des revendications précédentes, **caractérisé en ce qu'**un orifice de soufflage (52) est formé dans une découpe à l'opposé d'une zone non cousue de l'autre découpe.

6. Ensemble selon l'une des revendications précédentes, **caractérisé en ce que** les découpes textiles (22, 32) sont réalisées d'un seul tenant l'une avec l'autre.
